# EUROPEAN PATENT SPECIFICATION

(11) **EP 2 196 686 B1**
(45) Date of publication and mention of the grant of the patent: **19.01.2011**
(21) Application number: 09178548.5
(22) Date of filing: 09.12.2009
(51) Int. Cl.: F16B 41/00

(54) **Antitheft locking device for fixing a wheel to a motor vehicle hub**
Diebstahlsicherung zum Fixieren eines Rades an einer Motorfahrzeugnabe
Dispositif antivol pour fixer une roue à un moyeu d'un véhicule à moteur

(30) Priority: 10.12.2008 IT TO20080921
(43) Date of publication of application: 16.06.2010
(73) Proprietor: Groppo, Lazzaro, 12040 Sanfre' (CN) (IT); Groppo, Matteo, 12040 Sanfre (CN) (IT)
(72) Inventor: Groppo, Lazzaro, 12040 Sanfre' (CN) (IT); Groppo, Matteo, 12040 Sanfre (CN) (IT)
(74) Representative: Robba, Pierpaolo

(56) References cited:
- EP-A2- 1 369 602
- WO-A1-03/081057
- DE-A1- 19 605 177

## Description

### Technical field

The present invention relates to an antitheft locking device for fixing a wheel to a motor vehicle hub.

More particularly, the invention relates to an antitheft locking device configured as a nut or bolt for fixing a wheel on a motor vehicle hub.

Antitheft locking devices are known, which are constructed as nuts or bolts and are equipped with an idle rotatable bushing, preventing the device from being turned by means of the conventional tools, such as fixed or adjustable spanners. In order to tighten or loosen said nuts or bolts it is therefore necessary to use a suitable antitheft key engaging the nut or bolt head and having a shape suitable for being engaged and turned by a conventional tool, such as just a fixed or adjustable spanner.

### Prior art

IT 1,279,160 and US 3,241,408 disclose corresponding examples of antitheft devices of the above kind.

EP 1369602 discloses an antitheft device for vehicle wheels, which may be constructed as a threaded nut or bolt and comprises a central guiding region for the actuation key and an actuation region, provided with offset holes, which surrounds said guiding region and which is engaged by the key.

WO 03/081057 discloses a device similar to the preceding one, in which the guiding portion is associated with the device by means of a partition capable of breaking when the guiding portion is hit with violence.

According to the prior art, the coupling between the complementary antitheft key and the nut or bolt head takes place through the engagement of a shaped projection provided in the key head and a corresponding complementary seat provided in the antitheft nut or bolt head. In the alternative, the projection could be provided in the nut or bolt head and the complementary seat could be formed in the key

Always according to the prior art, the seat can be configured as a continuous or interrupted groove with different shapes, or as a plurality of randomly arranged holes. If a groove is provided, tampering of the device is generally more difficult than in the case in which holes are provided, due to the lower tendency of the groove to provide an abutment surface for a tool.

Still in accordance with the prior art, in order to prevent the nut or bolt from being turned without using the complementary antitheft key, a bushing is provided that is mounted onto the nut or bolt head and is freely rotatable relative to said head.

Thanks to the provision of the idle bushing, i.e. mounted so as to be freely rotatable about the nut or bolt body, it is impossible to grip and loosen the nut or bolt from the outside by means of a conventional tool, such as pliers or the like.

Antitheft devices of the above kind developed in the past have been provided with several features for improving security thereof, capable of withstanding the usual tampering attempts.

Of course, should turning the nut or bolt head be possible without using the complementary key, the antitheft function of the device would be thwarted.

In the prior art devices such a circumstance could occur, for instance, by introducing the tip of a chisel or a similar tool into the shaped seat provided for the complementary key and by hitting the chisel, kept oblique, by a hammer or the like.

The everyday's experience reveals that the prior art devices do not wholly eliminate such a tampering possibility.

Therefore, at present, there is a need for antitheft devices of the kind discussed above, which are capable of withstanding more and more severe tampering attempts, in particular attempts that can result in turning the nut or bolt head by means of tools other than the corresponding complementary key.

Thus, it is a first object of the invention to provide an antitheft locking device for fixing a motor vehicle wheel, which device is capable of withstanding such particularly severe tampering attempts.

It is another object of the invention to provide an antitheft device of the above kind, which can be made either as a bolt or as a nut.

Moreover, in the antitheft devices of the above kind, the head is generally subjected to a chroming treatment, in order to improve its aesthetical appearance.

Actually, said antitheft devices are generally intended to replace the conventional nuts or bolts the vehicles are equipped with, which nuts or bolts are often chromed in order to improve their aesthetical appearance, especially when they are associated with light-alloy rims.

However, due to its nature, the chroming treatment, which generally is performed after a copper plating process, has the drawback that it cannot perfectly reach the deepest portions of the antitheft groove provided in the head. Due to such a drawback, the resulting antitheft device can get rusty because of the imperfect chroming.

On the other hand, increasing the thickness of the chrome layer, besides correspondingly increasing the treatment cost, would contribute to enhance a second drawback resulting from the unavoidable variation and lack of uniformity of the groove section, and this should be taken into account when making the corresponding projection on the complementary key.

Since, as said above, the antitheft nuts or bolts are intended for replacing the original nuts or bolts, even only partly in the set used for each wheel rim of a vehicle, it is necessary that such antitheft nuts or bolts have substantially the same mass as the original ones, so that the balance of the wheel is not changed once they are mounted thereon.

An excessive thickness of the chrome layer would therefore give rise to the drawback of substantially modifying the nut or bolt mass, with a consequent need for compensation.

Thus, it is a further object of the invention to solve the above problem, by providing an antitheft device which can be chromed when necessary and which yet is resistant to rust.

It is a further, but not the last object of the invention, to provide an antitheft device which can be obtained by simple and cheap adaptations of the present production plants and processes.

The above and other objects are achieved by the antitheft locking device as claimed in the appended claims.

Advantageously, thanks to the provision of a grooved flange radially extending around the guiding portion of the complementary key, it is possible to arrange the groove near the surface of the rim against which the nut or bolt head abuts, thereby making fraudulent turning of the antitheft locking device considerably more improbable.

Thanks to such a feature, the antitheft device is therefore more reliable and secure than the prior art devices and offers a greater resistance even to the most severe tampering attempts.

Moreover, always in accordance with the invention, arranging the engagement means for the complementary key on the radial flange allows increasing the lever arm with which said key operates during turning for locking or unlocking the antitheft device, thereby reducing the effort required.

Advantageously, moreover, thanks to such arrangement of the flange, it is possible to dispense with chroming thereof, without affecting the aesthetical appearance of the nut or bolt.

Advantageously as well, the antitheft device in accordance with the invention can be obtained by simple and cheap interventions on the conventional working steps.

Some embodiments of the invention will be described by way of non limiting examples with reference to the accompanying drawings, in which elements denoted by a same numerical reference correspond to components having the same or similar function and construction, and in which:
- Fig. 1A is a longitudinal cross-sectional view of the device, according to a first embodiment of the invention;
- Fig. 1B is a top plan view of the device shown in Fig. 1A;
- Fig. 2A is a longitudinal cross-sectional view of an antitheft key;
- Fig. 2B is a top plan view of the key shown in Fig. 2A;
- Fig. 3A is a longitudinal cross-sectional view of the device, according to a second embodiment of the invention;
- Fig. 3B is a top plan view of the device shown in Fig. 3A.

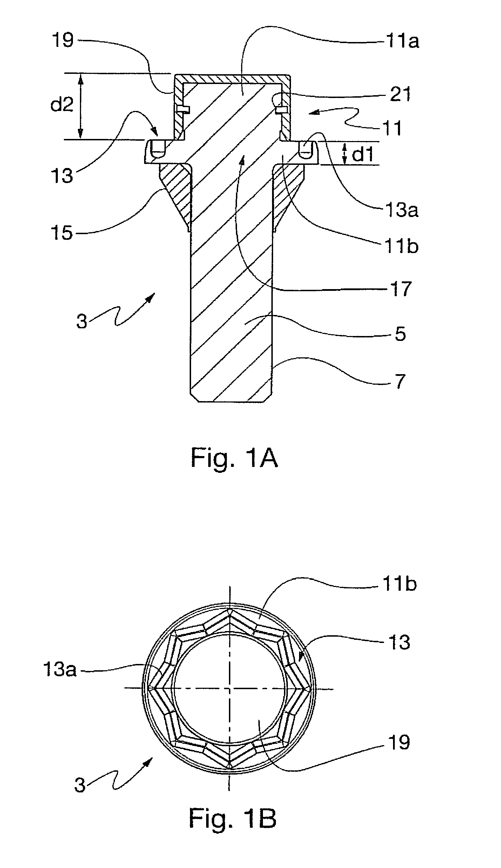

With reference to Figs. 1A and 1B, an antitheft locking device 3 according to a first embodiment of the invention is shown, which is made as an antitheft bolt and is so shaped that its turning by a conventional tool is made difficult.

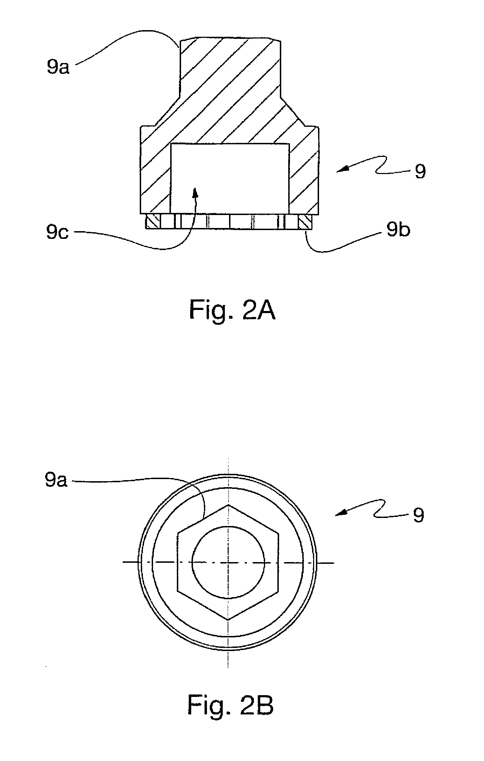

In the example illustrated, antitheft device 3 includes a shank or stud 5 in which there are defined an externally threaded end 7 and a head 11 provided with engagement means 13 for a complementary key 9 (Figs. 2A, 2B) by which said device 3 can be turned. In conventional manner, said key 9 has a hexagonal axial extension 9a in which a fixed spanner can engage.

Threaded end 7 of shank 5 is arranged to engage the threaded hole of the hub of a motor vehicle wheel, in order to lock a corresponding wheel rim. To this end, a circumferential, preferably oblique, abutment portion 15 is provided on shank 5 and it surrounds shank 5 at a transition region 17 between said shank 5 and said head 11.

According to the invention, head 11 has a cylindrical first portion 11a, opposite said shank 5, axially extending and integral with shank 5 of device 3, and a second portion 11b, radially extending around said first portion 11a.

Moreover, a blind bushing 19 that is mounted idle, i.e. freely rotatable, for instance thanks to a ring 21 preventing its removal, is provided around portion 11a of head 11, in order to prevent said portion, and hence threaded shank 5, from being turned by means of a tool other than the corresponding key 9.

Said engagement means 13 for the complementary key 9 by which said device 3 can be turned are advantageously formed in said second portion 11b, which defines a corresponding radial flange. In conventional manner, said engagement means 13 consist for instance of one or more seats or grooves 13a arranged to receive complementary projections 9b provided in the head of the corresponding antitheft key 9.

According to the invention, the cylindrical first portion 11a, relative to which said flanged second portion 11b of head 11 radially extends and which is equipped with freely rotatable bushing 19, defines a corresponding axial guiding portion for an axial hollow 9c provided in key 9. More precisely, said flanged portion 11b is located in correspondence of transition region 17 and radially extends at least over a substantial portion of, and preferably is wider than, abutment portion 15.

According to a preferred embodiment of the invention, said flanged portion 11b has moreover a sufficient radial extension, so that it defines an annulus which is sufficiently wide to house a groove 13a, shaped so as to allow defining a plurality of combinations. Moreover, said groove 13a is preferably a continuous groove, or it can be interrupted in order to further differentiate the combinations among different devices equipping different vehicles.

Still with reference to such an embodiment, said flanged portion 11b is preferably 3 to 7 mm wide, more preferably about 5 mm wide.

Thanks to such an arrangement of flanged portion 11b, when the antitheft device is locked, engagement means 13 are advantageously located in correspondence of the region closest to the vehicle rim, instead of being located in correspondence of portion 11a as in the prior art. Thus, the possibility of engaging the antitheft device by means of tools other than the corresponding key 9 is considerably reduced.

Advantageously, axial length "d1" of said flanged portion 11b is appreciably shorter than axial length "d2" of guiding portion 11a, so that the surface of said flange which is exposed to the risk of possible tampering or breaking attempts is correspondingly reduced.

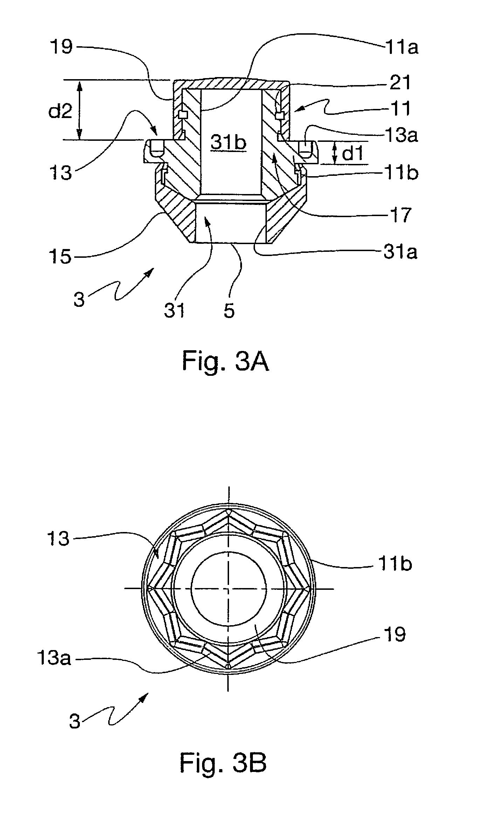

Referring now to Figs. 3A and 3B, a second embodiment of the invention is shown, in which antitheft device 3 is made as an antitheft nut.

Actually, even if device 3 according to the invention has been disclosed hereinbefore with reference to a bolt, it is however possible to make the device as a nut. To this end, shank 5, instead of having an externally threaded portion, has a threaded hole 31 with an internally threaded portion 31a, in order shank 5 can be screwed on the shank of a threaded stud bolt provided, in conventional manner, on the vehicle hub.

Advantageously, according to this embodiment, hole 31 can be made either as a blind hole or as a through-hole, and it will have a second portion 31 b, which extends into head 11 of the antitheft device and is outwardly open so as to reach bushing 19. Said second portion 31b can be advantageously exploited in order to obtain, for instance by grinding the diameter or by adding inserts, the desired mass of the antitheft nut, so that such mass is preferably identical to that of the original nut.

Thanks to the provision of engagement means 13 on radial flange 11b, said hole 31a, 31b can be made as a through-hole, whereby the manufacture of the antitheft device is made simpler.

## Claims

1. Antitheft locking device (3) for fixing a wheel to a motor vehicle hub, the device being realized in the form of nut or bolt and comprising a head (11) provided with a guiding portion (11a) for a complementary key (9) with which it is possible to rotate said device, and with a portion (11b) extending radially around said guiding portion (11a) and equipped with engagement means (13) for said complementary key (9), the device being **characterised in that** it comprises a blank bushing (19), which is freely rotatably mounted around the guiding portion (11a).

2. Device according to claim 1, wherein there are provided a stud (5) externally or internally threaded and a head (11) equipped with engagement means (13) for a complementary key (9) with which it is possible to rotate said device (3) and wherein said head (11) comprises a first cylindrical portion (11a) opposite said stud (5), axially extending and integral with the stud (5) of the device (3), and a second portion (11b) radially extending around said first portion (11a).

3. Device according to claim 2, wherein said second portion (11b) defines a corresponding radial flange on which there are defined said engagement means (13) for the complementary, key (9) with which it is possible to rotate said device (3).

4. Device according to claim 3, wherein said flanged portion (11b) is located at a transition portion (17) between said stud (5) and said head (11)

5. Device according to claim 4, wherein said flanged portion (11b) radially extends for a portion greater than an abutment portion (15), provided around the stud (5).

6. Device according to claim 4, wherein the axial length "d1" of said flanged portion (11b) is appreciably reduced with respect to the axial length "d2" of the guiding portion (11a) so that the surface of said flange which is exposed to the risk of possible breaking attempts is reduced correspondingly.

7. Device according to any of the preceding claims, wherein said engagement means (13) are realized in the form of one or more seats or grooves (13a) capable of receiving (a) complementary protrusion(s) (9b) provided on the head of the corresponding antitheft key (9).

8. Device according to any of the preceding claims, wherein said device is realized in the form of an antitheft bolt and comprises an externally threaded end (7) provided on said stud (5).

9. Device according to any of the claims from 1 to 7, wherein said device is realized in the form of an antitheft nut and comprises a hole (31) provided in said stud (5), said hole (31) having a threaded portion (31a) capable of being screwed on a stud of a threaded stud bolt provided, according to the known art, in the motor vehicle hub.

10. Device according to claim 9, wherein said hole (31) is a through-hole and has a second portion (31b), which extends into the head (11) of the antitheft device and is outwardly open so as to reach the bushing (19).

11. Device according to any of the claims from 1 to 6, wherein said engagement means (13) are realized in the form of a continuous groove.

## Patentansprüche

1. Diebstahlsicherung (3) zum Fixieren eines Rades an einer Motorfahrzeugnabe, wobei die Diebstahlsicherung in Form einer Mutter oder eines Stifts ausgebildet ist und einen Kopf (11) aufweist, der mit einen Führungsabschnitt (11a) für einen komplementären Schlüssel (9) ausgestattet ist, mit dem es möglich ist, die Diebstahlsicherung zu drehen, und mit einem Abschnitt (11b), der radial um den Führungsabschnitt (11a) erstreckt und mit Eingriffsmitteln (13) für den komplementären Schlüssel (9) ausgerüstet ist, **dadurch gekennzeichnet, dass** die Diebstahlsicherung eine blanke Hülse (19) aufweist, die frei rotierbar um den Führungsabschnitt (11a) montiert ist.

2. Diebstahlsicherung nach Anspruch 1, die einen Bolzen (5) mit einem Innengewinde oder einem Außengewinde und einen Kopf (11) mit Eingriffsmitteln (13) für einen komplementären Schlüssel (9), mit dem es möglich ist, die Diebstahlsicherung (3) zu drehen, aufweist und wobei der Kopf (11) gegenüber von dem Bolzen (5) einen ersten zylindrischen Abschnitt (11a), der sich in axialer Richtung erstreckt und integral mit dem Bolzen (5) der Diebstahlsicherung (3) ausgebildet ist, und einen zweiten Abschnitt (11b), der sich radial um den ersten Abschnitt (11a) erstreckt, aufweist.

3. Diebstahlsicherung nach Anspruch 2, wobei der zweite Abschnitt (11 b) einen korrespondierenden radialen Flansch bildet, auf dem die Eingriffsmittel (13) für den komplementären Schlüssel (9), mit dem es möglich ist, die Diebstahlsicherung zu drehen, ausgebildet sind.

4. Diebstahlsicherung nach Anspruch 3, wobei der Flanschabschnitt (11 b) in einem Übergangsabschnitt (17) zwischen dem Bolzen (5) und dem Kopf (11) angeordnet ist.

5. Diebstahlsicherung nach Anspruch 4, wobei der Flanschabschnitt (11 b) sich radial um einen Abschnitt erstreckt, der größer als ein Anschlagabschnitt (15) ist, der um den Stift (5) vorgesehen ist.

6. Vorrichtung nach Anspruch 4, wobei die axiale Länge "d1" des Flanschabschnitts (11 b) in Bezug auf die axiale Länge "d2" des Führungsabschnitts (11a) merklich reduziert ist, so dass die Oberfläche des Flanschs, die der Gefahr möglicher Bruchversuche ausgesetzt ist, entsprechend reduziert ist.

7. Diebstahlsicherung nach einem der vorstehenden Ansprüche, wobei die Eingriffsmittel (13) in Form von einer oder mehreren Pfannen oder Nuten (13a) ausgebildet sind, die passende Vorsprünge (9b), die am Kopf des dazu gehörenden Diebstahlsicherungsschlüssels (9) vorgesehen sind, aufnehmen können.

8. Diebstahlsicherung nach einem der vorstehenden Ansprüche, wobei die Diebstahlsicherung in Form eines Diebstahlsicherungsbolzens ausgebildet ist und ein Ende mit einem Außengewinde aufweist, das an dem Bolzen (5) vorgesehen ist.

9. Diebstahlsicherung nach einem der Ansprüche 1 bis 7, wobei die Diebstahlsicherung in Form einer Diebstahlsicherungsmutter ausgebildet ist und ein Loch (31) aufweist, das in dem Bolzen (5) vorgesehen ist, wobei das Loch (31) einen Gewindeabschnitt (31 a) hat, der auf einen Bolzen eines Gewindestifts aufgeschraubt werden kann, der nach dem bekannten Stand der Technik in der Motorfahrzeugnabe vorgesehen ist.

10. Diebstahlsicherung nach Anspruch 9, wobei das Loch (31) ein durchgehendes Loch ist und einen zweiten Abschnitt (31 b) aufweist, der sich in den Kopf (11) der Diebstahlsicherung erstreckt und nach außen offen ist, so dass er die Hülse (19) erreicht.

11. Diebstahlsicherung nach einem der Ansprüche 1 bis 6, wobei das Eingriffsmittel (13) in Form einer durchgehenden Nut ausgebildet ist.

## Revendications

1. Dispositif de blocage antivol (3) pour fixer une roue à un moyeu d'un véhicule à moteur, le dispositif étant réalisé sous la forme d'un écrou ou d'un boulon et comportant une tête (11) dotée d'une partie de guidage (11a) pour une clé complémentaire (9) avec laquelle il est possible de faire tourner ledit dispositif, et d'une partie (11b) s'étendant radialement autour de ladite partie de guidage (11a) et équipée de moyens d'engagement (13) pour ladite clé complémentaire (9), le dispositif étant **caractérisé en ce qu'**il comporte un manchon de fermeture (19), lequel est monté à rotation libre autour de la partie de guidage (11a).

2. Dispositif selon la revendication 1, dans lequel il est prévu une tige (5) filetée sur l'extérieur ou sur l'intérieur et une tête (11) dotée de moyens d'engagement (13) pour une clé complémentaire (9) avec laquelle il est possible de faire tourner ledit dispositif (3) et dans lequel ladite tête (11) comporte une première partie cylindrique (11a) opposée à ladite tige (5), s'étendant axialement et solidaire de la tige (5) du dispositif (3), et une seconde partie (11b) s'étendant radialement autour de ladite première partie (11a).

3. Dispositif selon la revendication 2, dans lequel ladite seconde partie (11b) définit une bride radiale correspondante sur laquelle se trouvent définis lesdits moyens d'engagement (13) pour la clé complémentaire (9) avec laquelle il est possible de faire tourner ledit dispositif (3).

4. Dispositif selon la revendication 3, dans lequel ladite partie de bride (11b) est placée au niveau d'une partie de transition (17) entre ladite tige (5) et ladite tête (11).

5. Dispositif selon la revendication 4, dans lequel ladite partie de bride (11b) s'étend de façon radiale sur une section plus grande qu'une section de butée (15) prévue autour de la tige (5).

6. Dispositif selon la revendication 4, dans lequel la longueur axiale "d1" de ladite partie de bride (11b) est réduite de façon considérable par rapport à la longueur axiale "d2" de la partie de guidage (11a) de telle sorte que la surface de ladite bride qui est exposée au risque de tentatives possibles de rupture soit réduite de façon correspondante.

7. Dispositif selon l'une quelconque des revendications précédentes, dans lequel lesdits moyens d'engagement (13) sont réalisés sous la forme d'une ou de plusieurs embase(s) ou gorge(s) (13a) capable(s) de recevoir une ou plusieurs partie(s) en saillie complémentaire(s) (96) prévue(s) sur la tête de la clé antivol correspondante (9).

8. Dispositif selon l'une quelconque des revendications précédentes, dans lequel ledit dispositif est réalisé sous la forme d'un boulon antivol et qui comporte une extrémité fileté en externe (7) fournie sur ladite tige (5).

9. Dispositif selon l'une quelconque des revendications 1 à 7, dans lequel ledit dispositif est réalisé sous la forme d'un écrou antivol et qui comporte un trou (31) prévu dans ladite tige (5), ledit trou (31) présentant une partie taraudée (31a) capable d'être vissée sur une tige d'un boulon à tige filetée prévu, selon la technique connue, dans le moyeu d'un véhicule à moteur.

10. Dispositif selon la revendication 9, dans lequel ledit trou (31) est un trou de passage et comporte une seconde portion (31b) qui s'étend dans la tête (11) du dispositif antivol et est ouvert vers l'extérieur de façon à atteindre le manchon (19).

11. Dispositif selon l'une quelconque des revendications 1 à 6, dans lequel lesdits moyens d'engagement (13) sont réalisés sous la forme d'une gorge continue.
